# EUROPÄISCHE PATENTANMELDUNG

(11) **EP 1 157 995 A2**
(43) Veröffentlichungstag der Anmeldung: **28.11.2001**
(21) Anmeldenummer: 01111177.0
(22) Anmeldetag: 11.05.2001
(51) Int. Cl.: C07F 15/00, C07C 209/04, C07C 209/10, C07C 253/30

(54) **Immobilisierte Palladiumkomplexe**

(30) Priorität: 24.05.2000 DE 10025623
(71) Anmelder: BAYER AG, 51368 Leverkusen (DE)
(72) Erfinder: Goossen, Lukas, Dr., 45472 Mühlheim (DE); Hendrix, Martin, Dr., 51061 Köln (DE)

(57) **Zusammenfassung**

Die Erfindung betrifft immobilisierte Palladiumkomplexe, ein Verfahren zu ihrer Herstellung, ihre Verwendung als Katalysatoren, sowie ein Verfahren zur Herstellung von Arylaminen unter Verwendung von immobilisierten Palladiumkomplexen.

## Beschreibung

Die Erfindung betrifft immobilisierte Palladiumkomplexe, ein Verfahren zu ihrer Herstellung, ihre Verwendung als Katalysatoren, sowie ein Verfahren zur Herstellung von Arylaminen unter Verwendung der immobilisierten Palladiumkomplexen.

Arylamine, speziell substituierte Aniline, sind von großer industrieller Bedeutung als Vorprodukte für Farbstoffe, Feinchemikalien, Pharmazeutika und Agrochemikalien. Die Herstellung von Arylaminen wird technisch im allgemeinen durch Nitrierung eines entsprechenden Aromaten und nachfolgender Hydrierung durchgeführt. Da Nitrierungen unter drastischen Reaktionsbedingungen durchgeführt werden, sind eine Vielzahl komplexer substituierter Arylamine nicht oder nur unzureichend auf diesem Weg darstellbar.

Weiterhin können Arylamine durch Ammonolyse von Phenolen und Chlorbenzolen hergestellt werden (K. Weissermel et al., Industrial Organic Chemistry, 1993, 2. Auflage,VCH Verlagsgesellschaft, Weinheim, 370-373). Auch diese Verfahrensweise ist aufgrund ihrer drastischen Reaktionsbedingungen für die Herstellung von substituierten Arylaminen ungeeignet.

US-A-5,576,460 beschreibt ein Verfahren zur Herstellung von Arylaminen durch Umsetzung von *in situ* hergestellten Metallamiden mit Aminen unter Verwendung von Palladiumkomplexen, welche Phosphinliganden tragen. Nachteilig an diesem Verfahren ist, dass die hierfür benötigten Phosphinliganden in der Regel kostspielig, luftempfindlich und schwierig in der Handhabung sind. Die daraus *in situ* erzeugten Palladiumkomplexe sind ebenfalls luftempfindlich und neigen zu Abbaureaktionen.

Nolan et al., Organic Letters Vol. 1, No. 8, 1999, 1307-1309 beschreiben die Herstellung von Arylaminen unter Verwendung von Palladiumkatalysatoren, welche heterocyclische Carbene als Liganden tragen. Im Vergleich zu Phosphinliganden weisen heterocyclische Carbene eine erhöhte thermische und chemische Widerstandsfähigkeit auf. Nachteilig an den von Nolan et al. eingesetzten Palladiumkatalysatoren ist jedoch, dass sie nach Beendigung der Reaktion aufwendig aus der Reaktionsmischung entfernt werden müssen. Weiterhin nachteilig ist, dass eine Recyclierung, d.h. ein erneuter Einsatz des Katalysators in einer weiteren Umsetzung nicht möglich ist.

Überraschenderweise wurden nun immobilisierte Palladiumkomplexe gefunden, die sich durch ihre einfache Darstellung, ihre hohe thermische Stabilität sowie ihre Unempfindlichkeit gegenüber Sauerstoff und Feuchtigkeit auszeichnen. Die erfindungsgemäßen Komplexe lassen sich vorzugsweise als Katalysatoren für die Herstellung von Arylaminen einsetzen, wobei sie eine hohe Aktivität und Selektivität aufweisen. Nach beendeter Umsetzung lassen sich die Katalysatoren einfach von der Reaktionsmischung abtrennen und in einer erneuten Umsetzung ohne Verlust ihrer Aktivität einsetzen.

Bei den erfindungsgemäßen Komplexen handelt es sich um an einen Träger gebundene Verbindungen der Formel (I) 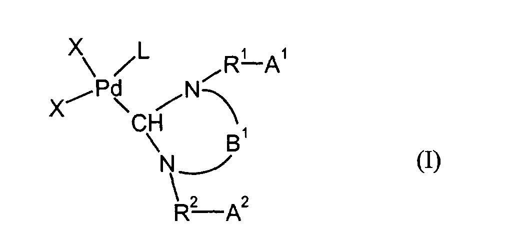 worin
- X: für Halogen, Trifluormethansulfonat, Acetylacetonat oder Acetat steht,
- L: für einen Rest der Formel P(D)₃ steht, wobei D für Alkyl, Cycloalkyl, Aryl, Aralkyl, Alkylaryl oder für Heteroaryl steht oder für einen Rest der Formel N(E)₂ steht, wobei E für Alkyl, Cycloalkyl, Aryl, Aralkyl, Alkylaryl oder für Heteroaryl steht oder für einen Rest der Formel (II) steht 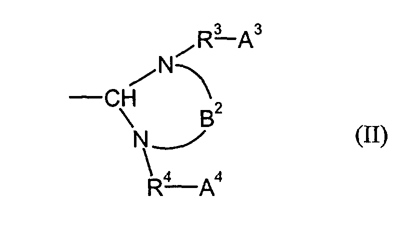
- B¹ und B²: gleich oder verschieden sind und für einen Rest zur Vervollständigung eines Heterocyclus stehen, insbesondere für 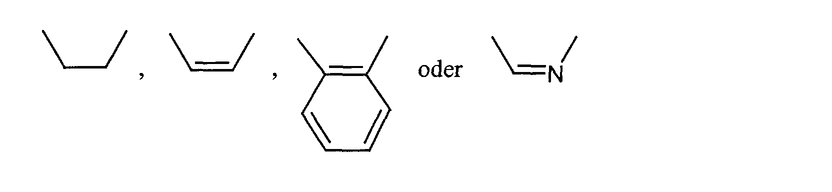
- R¹- R⁴: gleich oder verschieden sind und für einen zweiwertigen Rest aus der Reihe Alkyl, Cycloalkyl, Aryl, Aralkyl und Alkylaryl stehen, der gegebenenfalls substituiert ist durch COO-(C₁-C₄-Alkyl), O(C₁-C₄-Alkyl) oder CONH₂,
- A¹-A⁴: gleich oder verschieden sind und für Wasserstoff oder für eine chemische Bindung aus der Reihe -CONH-, -CO-O-OC-, -COO-, -O- und 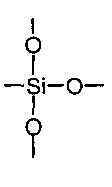 stehen, über die der Komplex an den Träger gebunden ist, mit der Maßgabe, dass mindestens ein A von Wasserstoff verschieden ist.

Dabei sind die oben verwendeten Begriffe wie folgt definiert:
"Halogen" bedeutet F, Cl, Br und I.
"Alkyl" bedeutet geradkettiges oder verzweigtes -C₁-C₁₂-Alkyl, beispielsweise Methyl, Ethyl, Propyl, Isopropyl, Butyl, sek.-Butyl, tert.-Butyl, Pentyl, Neopentyl, Hexyl, Heptyl, Isoheptyl, 2-Ethylhexyl oder Octyl.
"Cycloalkyl" bedeutet -C₃-C₈-Cycloalkyl, beispielsweise Cyclopropyl, Cyclobutyl, Cyclopentyl, Cyclohexyl, Cycloheptyl oder Cyclooctyl.
"Aryl" bedeutet -C₆-C₁₄-Aryl, beispielsweise Phenyl, Naphthyl oder Biphenyl.
"Aralkyl" bedeutet -C₁-C₁₂-Alkyl-C₆-C₁₄-Aryl, wobei der Alkylteil die freie Valenz aufweist, beispielsweise Phenylmethyl, Phenylethyl, Naphthylmethyl, Naphthylethyl, Diphenylmethyl oder Triphenylmethyl.
"Alkylaryl" bedeutet -C₆-C₁₄-Aryl-C₁-C₁₂-Alkyl, wobei der Arylteil die freie Valenz aufweist, beispielsweise Tolyl, Ethylphenyl, Xylyl, Methylnaphthyl oder Ethylnaphthyl.
"Heteroaryl" bedeutet ungesättigte Ringe mit 5 oder 6 Atomen, die ein oder zwei Sauerstoffatome und Schwefelatome und/oder ein bis vier Stickstoffatome enthalten, mit der Maßgabe, dass die Gesamtanzahl an Heteroatomen vier oder weniger ist, beispielsweise Furan, Thiophen, Pyridin, Pyrrol oder Imidazol oder bicyclische Ringe, worin die oben definierten 5- oder 6-gliederigen Ringe an einen Benzol- oder Pyridinring ankondensiert sind, beispielsweise Purine, Benzopyran oder Benzimidazol.

Bevorzugt handelt es sich bei den erfindungsgemäßen Komplexen um an einen Träger gebundene Verbindungen der Formel (I), worin
- X: für Halogen steht,
- L: für einen Rest der Formel P(D)₃ steht, wobei D für eine Gruppe aus der Reihe Cyclohexyl, Phenyl, Naphthyl und Tolyl steht, oder für einen Rest der Formel (II) steht, 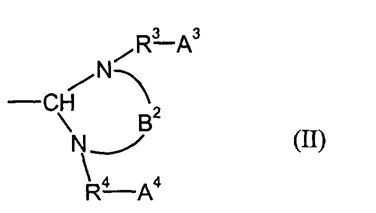
- B¹ und B²: gleich oder verschieden sind und für 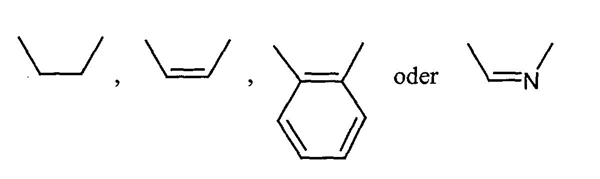
stehen,
- R¹-R⁴: gleich oder verschieden sind und für einen zweiwertigen Rest aus der Reihe Alkyl, Cycloalkyl, Aryl, Aralkyl und Alkylaryl stehen, der gegebenenfalls substituiert ist durch COO-(C₁-C₄-Alkyl), O(C₁-C₄-Alkyl) oder CONH₂,
- A¹-A⁴: gleich oder verschieden sind und für Wasserstoff oder für eine chemische Bindung aus der Reihe -CONH-, -CO-O-OC-, -COO-, -O- und 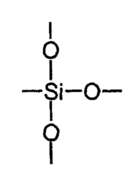 stehen, über die der Komplex an den Träger gebunden ist, mit der Maßgabe, dass mindestens ein A von Wasserstoff verschieden ist und der Träger ein Träger aus der Reihe anorganische Träger und polymere Träger ist.

Besonders bevorzugt handelt es sich bei den erfindungsgemäßen Komplexen um Verbindungen der Formel (I) worin
- X: für I steht,
- L: für 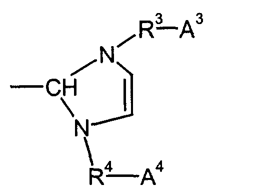
steht,
- B¹: für 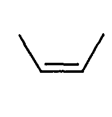 steht,
- R¹ und R³: gleich sind und für einen zweiwertigen Rest aus der Reihe -(C₁-C₆-Alkyl)-, vorzugsweise -CH₂-, stehen,
- R² und R⁴: gleich sind und für einen zweiwertigen Rest aus der Reihe -(C₁-C₆-Alkyl)-, vorzugsweise -(CH₂)₃-, stehen,
- A¹ und A³: gleich sind und für Wasserstoff stehen, und
- A² und A⁴: gleich sind und für eine chemische Bindung aus der Reihe -CONH-, -CO-O-OC-, -COO-, -O- und 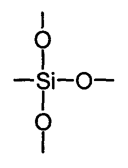 stehen, und der Träger ein anorganischer Träger aus der Reihe Kieselgel, Magnesiumoxid und Aluminiumoxid oder ein polymerer Träger aus der Reihe Polyester, Polyether, Polyethylen, Polypropylen und Polystyrol ist.

Ganz besonders bevorzugte Träger sind fünktionalisierte, mit Divinylbenzol quervernetzte Polystyrole wie sie in der Festphasen-Peptidchemie oder für die Festphasen-Synthese üblich sind.

Die erfindungsgemäßen Komplexe können *in situ* oder separat hergestellt werden. Dazu können die Liganden zuerst auf dem Träger fixiert werden. Die fixierten Liganden können dann *in situ* oder separat zu den erfindungsgemäßen Komplexen umgesetzt werden.

Weiterhin kann zur separaten Herstellung zuerst aus Liganden und Pd-Verbindung der freie Komplex hergestellt werden, welcher dann zur Herstellung der erfindungsgemäßen Komplexe auf dem Träger fixiert wird.

Erfindungsgemäß ist weiterhin ein Verfahren zur Herstellung von Verbindungen der Formel (I) welches dadurch gekennzeichnet ist, dass Verbindungen der Formel (III) und (IV) 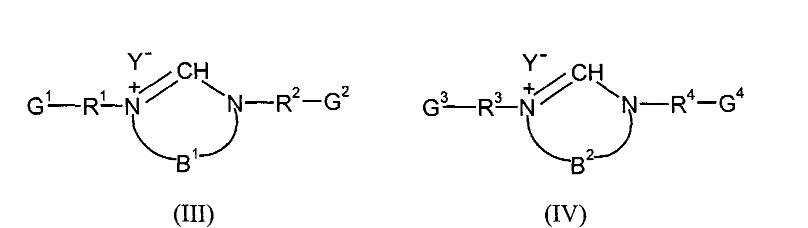 worin
- B¹ und B²: gleich oder verschieden sind und für einen Rest zur Vervollständigung eines Heterocyclus stehen, insbesondere für 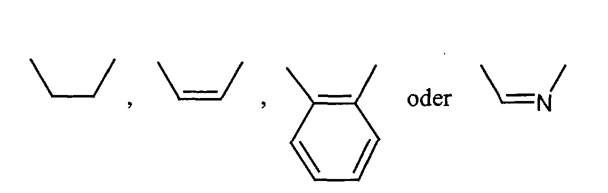
- R¹-R⁴: gleich oder verschieden sind und für einen zweiwertigen Rest aus der Reihe Alkyl, Cycloalkyl, Aryl, Aralkyl und Alkylaryl stehen, der gegebenenfalls substituiert ist durch COO-(C₁-C₄-Alkyl), O(C₁-C₄-Alkyl) oder CONH₂,
- G¹-G⁴: gleich oder verschieden sind und für Wasserstoff, COOH, CO-O-CO(C₁-C₄-Alkyl), COO(C₁-C₄-Alkyl), COCl, CO(C₁-C₄-Alkyl), COH, NH₂, NH(C₁-C₄-Alkyl), OH, Si(O-C₁-C₄-Alkyl)₃ oder OCN stehen, mit der Maßgabe, dass mindestens ein G von Wasserstoff verschieden ist,
- Y: für ein Anion aus der Reihe Cl, Br, I, C₁-C₄-Alkylsulfonat, C₆-C₁₄-Arylsulfonat, Hexafluorophosphat und Tetrafluoroborat steht,
oder Verbindungen der Formel (III) und P(D)₃ oder Verbindungen der Formel (III) und N(E)₂ mit Pd-(II)-Verbindungen in Gegenwart einer Base umgesetzt werden und das Reaktionsprodukt, ein Pd-N-heterocyclischer Komplex, auf einem Träger immobilisiert wird, welcher gegenüber G, außer Wasserstoff, reaktive Gruppen aufweist. Das oben beschriebene erfindungsgemäße Verfahren wird im folgenden als Synthesevariante A bezeichnet.

Weiterhin erfindungsgemäß ist ein Verfahren zur Herstellung von Verbindungen der Formel (I), dadurch gekennzeichnet, dass Verbindungen der Formel (III) oder Verbindungen der Formel (III) und (IV) auf einem Träger immobilisiert werden, welcher gegenüber G, außer Wasserstoff, reaktive Gruppen aufweist und mit Pd-(II)-Verbindungen und - für den Fall, dass nur Verbindungen der Formel (III) auf einem Träger immobilisiert sind - mit P(D)₃ oder N(E)₂ in Gegenwart einer Base umgesetzt werden. Das oben beschriebene erfindungsgemäße Verfahren wird im folgenden als Synthesevariante B bezeichnet.

Vorzugsweise handelt es sich bei den Verbindungen der Formel (III) und (IV) um Imidazole, Imidazoline, Triazole oder Benzimidazole, besonders bevorzugt um Imidazole.

Vorzugsweise handelt es sich bei den Verbindungen P(D)₃ um solche, bei denen D für eine Gruppe aus der Reihe Cyclohexyl, Phenyl, Naphthyl und Tolyl steht.

Zur Herstellung des Pd-N-heterocyclischen Komplexes werden vorzugsweise Verbindungen der Formel (III) und (IV) eingesetzt, worin
- R¹-R⁴: gleich oder verschieden sind und für einen zweiwertigen Rest aus der Reihe -(C₁-C₆-Alkyl)-, -(C₆-C₁₄-Aryl)- und -(C₁-C₄-Alkyl-C₆-Aryl)-stehen,
- B¹ und B²: gleich oder verschieden sind und für 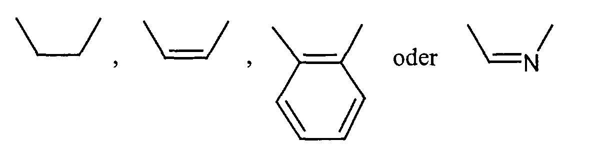
stehen,
- G¹ und G³: für Wasserstoff stehen und
- G² und G⁴: gleich oder verschieden sind und für COOH, CO-O-CO(C₁-C₄-Alkyl), COO(C₁-C₄-Alkyl), COCl, CO(C₁-C₄-Alkyl), NH₂, NH(C₁-C₄-Alkyl), Si(O-C₂-C₄-Alkyl)₃, OCN oder OH stehen.

Besonders bevorzugt werden Verbindungen der Formel (III) und (IV) eingesetzt, worin
- B¹ und B²: für 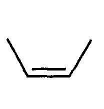 stehen
- R¹ und R³: gleich sind und für einen zweiwertigen Rest aus der Reihe -(C₁-C₆-Alkyl)-, vorzugsweise -CH₂-, stehen,
- R² und R⁴: gleich sind und für einen zweiwertigen Rest aus der Reihe -(C₁-C₆-Alkyl)-, vorzugsweise -(CH₂)₃-, stehen,
- G¹ und G³: für Wasserstoff stehen und
- G² und G⁴: gleich sind und für COOH, CO-O-CO(C₁-C₄-Alkyl), COO(C₁-C₄-Alkyl), COCl, NH₂, OH, Si(O-C₁-C₄-Alkyl)₃ oder OCN, vorzugsweise für COO-(C₁-C₄-Alkyl) stehen.

Die Herstellung der Verbindungen der Formel (III) und (IV) kann beispielsweise analog zu Herrmann et al., Chem. Eur. J 2, No. 12, 1996, 1627-1636 erfolgen.

Jede der Verbindungen der Formel (III) und (IV), P(D)₃ und N(E)₂ wird vorzugsweise in einer Menge von 0,6 bis 4 Äquivalenten, bevorzugt 0,8 bis 3 Äquivalenten, besonders bevorzugt 0,9 bis 2 Äquivalenten, bezogen auf die Pd-(II)-Verbindungen, eingesetzt.

Als Pd-(II)-Verbindungen können Palladiumacetat, -halogenide, -nitrat, -carbonat, -ketonat oder -acetylacetonat eingesetzt werden. Vorzugsweise wird Pd(OAc)₂, Pd(acac)₂ oder PdCl₂ eingesetzt, besonders bevorzugt Pd(OAc)₂.

Als Basen werden vorzugsweise Alkali- und Erdalkalialkoholate wie Lithium-tert.-butanolat, Natrium-tert.-butanolat oder Kalium-tert.-butanolat sowie Alkali- und Erdalkalicarbonate wie Natriumcarbonat oder Kaliumcarbonat eingesetzt. Bevorzugt werden Alkalialkoholate oder Alkalicarbonate eingesetzt, besonders bevorzugt Natrium-tert.-butanolat oder Kaliumcarbonat eingesetzt. Die Base wird vorzugsweise in einer Menge von 0,5 bis 2 Äquivalenten, insbesondere 1 bis 3 Äquivalenten, besonders bevorzugt 1,2 bis 2 Äquivalenten, bezogen auf die Pd-(II)-Verbindung, eingesetzt.

Als Träger werden vorzugsweise anorganische Träger oder polymere Träger eingesetzt. Besonders bevorzugt handelt es sich um einen Träger aus der Reihe Kieselgel, Magnesiumoxid, Aluminiumoxid, Polyester, Polyether, Polyethylen, Polypropylen und Polystyrol.

Vorzugsweise werden die erfindungsgemäßen Verfahren in Gegenwart von Alkaliiodiden wie LiI, NaI, KI oder CsI durchgeführt. Bevorzugt werden NaI oder KI eingesetzt, besonders bevorzugt NaI. Die Alkaliiodide werden vorzugsweise in einer Menge von 2 bis 6 Äquivalenten, bevorzugt von 3 bis 5 Äquivalenten, bezogen auf die Pd-(II)-Verbindungen eingesetzt.

Vorzugsweise arbeitet man bei Durchführung der Synthesevariante A bei der Herstellung der Pd-N-heterocyclischen Komplexe in einem inerten Lösungsmittel, bevorzugt in einem polaren Lösungsmittel, besonders bevorzugt in Tetrahydrofuran oder Ethanol.

Die Umsetzung erfolgt beispielsweise bei Temperaturen von 0°C bis 100°C, vorzugsweise bei 10°C bis 40°C, besonders bevorzugt bei 18°C bis 25°C.

Üblicherweise erfolgt die Umsetzung unter Ausschluss von Wasser, vorzugsweise unter Intergasen wie Stickstoff, Argon oder Helium.

Bei der Durchführung der Synthesevariante A können zur Herstellung der Pd-N-heterocyclischen Komplexe die oben genannten Ausgangsverbindungen in einem Reaktionsgefäß vorgelegt werden. Danach kann das Lösungsmittel zugegeben werden, und der Reaktionsansatz wird vorzugsweise bei Raumtemperatur einige Stunden gerührt. Der Fortschritt der Reaktion kann mittels Dünnschichtchromatographie verfolgt werden. Nach beendeter Umsetzung kann das Lösungsmittel abgezogen werden, der Rückstand kann säulenchromatographisch gereinigt werden.

Die Immobilisierung der nach der Synthesevariante A hergestellten Pd-N-heterocyclischen Komplexe auf einen Träger wird vorzugsweise so durchgeführt, dass der Pd-Komplex in einer solchen Menge, die der späteren gewünschten Beladung des Trägers entspricht, mit dem Träger umgesetzt wird. Gegebenenfalls werden die Gruppen G der Pd-N-heterocyclischen Komplexe oder die reaktiven Gruppen des Trägers durch geeignete Reagenzien aktiviert. Beispielsweise können Aminogruppen durch Verbindungen wie Triethylaluminium in reaktivere Diethylaluminiumamide überführt werden oder Carboxylgruppen in Aktivester oder Anhydride überführt werden. Bei der Umsetzung reagieren die funktionellen Gruppen des Carbenkomplexes mit den reaktiven Gruppen des Trägers unter Ausbildung einer chemischen Bindung. Gegebenenfalls können nach der Reaktion noch vorhandene freie reaktive Gruppen des Trägers mit geeigneten Reagenzien in unreaktive Gruppen überführt werden.

Zur Immobilisierung der Pd-N-heterocyclischen Komplexe auf Trägern kann der Komplex zusammen mit dem Träger, gegebenenfalls unter Zusatz von Aktivierungsreagenzien oder Kondensationsmitteln in einem Lösungsmittel, vorgelegt werden. Bei polymeren Trägern werden vorzugsweise Lösungsmittel verwendet, in denen der polymere Träger in gequollenem Zustand vorliegt. Der Reaktionsansatz wird vorzugsweise gut durchmischt, wobei die Durchmischung bevorzugt durch Schütteln erfolgt, da ein starkes Rühren zur Zerkleinerung der Träger führen kann. Die Reaktion wird gegebenenfalls unter Erwärmung durchgeführt. Das Fortschreiten der Reaktion kann beispielsweise durch Festphasen-FT-IR-Spektroskopie beobachtet werden. Nach Beendigung der Reaktion kann der Träger abfiltriert, gewaschen und getrocknet werden.

Die Immobilisierung der Pd-N-heterocyclischen Komplexe auf anorganischen Trägern kann analog zu J. Blümel, Inorg. Chem. 33, 1994, 5050-5056 erfolgen.

Die Immobilisierung der Pd-N-heterocyclischen Komplexe auf polymeren Trägern kann analog zu F.R. Hartley, Supported Metal Complexes, D. Reidel Publishing Company, Dordrecht, Boston, Lancester, Tokyo 1985, 170-174, erfolgen.

Bevorzugt findet die Immobilisierung der Pd-N-heterocyclischen Komplexe auf einem polymeren Träger statt, vorzugsweise auf mit Divinylbenzol quervernetztem Polystyrol, besonders bevorzugt auf Merrifieldharz, einem chlormethylierten, mit Divinylbenzol quervernetzten Polystyrolharz oder auf aminomethyliertem, mit Divinylbenzol quervernetztem Polystyrol.

Bei der Durchführung der Synthesevariante B kann die Fixierung auf dem Träger analog der obigen Beschreibung erfolgen. Die Umsetzung der geträgerten Verbindungen (III) und/oder (IV) oder P(D)₃ oder N(E)₂ mit Pd-(II)-Verbindungen kann ebenfalls analog zur Synthesevariante A erfolgen.

Eine Herstellung von Pd-N-heterocyclischen Komplexen mit Verbindungen der Formel (III) und P(D)₃ oder N(E)₂ kann analog zu Enders et al., Chem. Ber.129, 1996, 459-463 erfolgen.

Die Verbindungen der Formel (I) eigenen sich beispielsweise als Katalysatoren für Carbonylierungen, Alkylierungen, Hydrierungen und zur Herstellung von Arylaminen.

Vorzugsweise eigenen sich die Verbindungen der Formel (I) als Katalysatoren bei der Herstellung von Arylaminen.

Erfindungsgemäß ist weiterhin ein Verfahren zur Herstellung von Arylaminen der Formel (V)

Ar-NR⁵R⁶ (V)

worin
- Ar: für Phenyl, Naphthyl, Pyridyl, Pyridazinyl, Pyrimidyl, Pyrazinyl, Pyrryl, Thiophenyl, Furyl, Imidazolyl, Oxazolyl, Isoxazolyl, Thiazolyl oder Triazolyl steht, und die vorgenannten Reste gegebenenfalls einen oder mehrere Substituenten aus der Reihe, C₁-C₈-Alkyl, C₃-C₈-Cycloalkyl, C₁-C₈-Alkoxy, C₁-C₈-Acyloxy, C₆-C₁₄-Aryl, C₆-C₁₄-Aryloxy, Halogen, C(Halogen)₃, NO₂, NH₂, NH(C₁-C₈-Alkyl), N(C₁-C₈-Alkyl)₂, NHCOR, NHCHO, NHCOOH, NHCOOR, OH, CN, COOH, CHO, CO(C₁-C₈-Alkyl), CO(C₆-C₁₄-Aryl), CO₂(C₆-C₁₄-Aryl), CO₂(C₁-C₈-Alkyl), CONH₂, SO₃H, SO₂R, SOR, PO(C₆-C₁₄-Aryl)₂, PO(C₁-C₈-Alkyl), Si(C₁-C₈-Alkyl)₃ und Heteroaryl tragen, wobei R für C₁-C₄-Alkyl steht, und
- R⁵ und R⁶: unabhänging voneinander für Wasserstoff oder für C₁-C₁₂-Alkyl, C₃-C₈-Cycloalkyl oder C₆-C₁₄-Aryl stehen, wobei die vorgenannten Reste gegebenenfalls einen oder mehrere Substituenten aus der Reihe C₁-C₈-Alkyl, C₃-C₈-Cycloalkyl, C₁-C₈-Alkoxy, C₁-C₈-Acyloxy, C₆-C₁₄-Aryl, C₆-C₁₄-Aryloxy, Halogen, C(Halogen)₃, NO₂, NH₂, NH(C₁-C₈-Alkyl), N(C₁-C₈-Alkyl)₂, NHCOR, NHCHO, NHCOOH, NHCOOR, OH, CN, COOH, CHO, CO(C₁-C₈-Alkyl), CO(C₆-C₁₄-Aryl), CO₂(C₆-C₁₄-Aryl), CO₂(C₁-C₈-Alkyl), CONH₂, SO₃H, SO₂R, SOR, PO(C₆-C₁₄-Aryl)₂, PO(C₁-C₈-Alkyl), Si(C₁-C₈-Alkyl)₃, und Heteroaryl tragen, wobei R für C₁-C₄-Alkyl steht oder gemeinsam für einen Ring mit bis zu 5 C-Atomen stehen, wobei ein C-Atom durch O oder N ersetzt sein kann,
durch Umsetzung von Arylverbindungen der Formel (VI)

Ar-Q (VI)

worin
- Ar: die oben angegebene Bedeutung hat und
- Q: für Halogen, Trifluormethansulfonyl oder Toluolsulfonyl steht,
mit Aminen der Formel (VII)

R⁵R⁶NH (VII)

worin
- R⁵ und R⁶: die oben angegebene Bedeutung haben oder mit 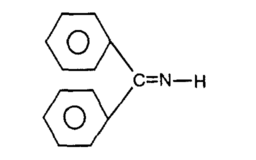
in Gegenwart von Basen, welches dadurch gekennzeichnet ist, dass die Umsetzung in Gegenwart von Verbindungen der Formel (I) durchgeführt wird.

Bevorzugte Arylverbindungen der Formel (VI) sind mono- oder disubstituierte Aromaten. Beispiele für monosubstituierte Aromaten sind Chlorbenzol, Brombenzol, Jodbenzol, Bromnaphthalin, Brompyridin oder Bromimidazol. Bevorzugte disubstituierte Aromaten sind solche die Substituenten an der 1,3- oder 1,4-Position tragen wie beispielsweise 4-Nitrochlorbenzol, 4-Methylchlorbenzol, 4-Methoxychlorbenzol, 4-Brombenzonitril, 4-Brombenzoesäure, 3-Ethoxybrombenzol, 3-Nitrobrombenzol oder 3-Methyliodbenzol.

Besonders bevorzugte Arylverbindungen der Formel (VI) sind 1,3- oder 1,4 disubstituierte Benzole wie beispielsweise 4-Nitrobrombenzol, 4-Nitrochlorbenzol, 3-Methylchlorbenzol, 3-Ethylbrombenzol oder 4-Brombenzonitril.

Bevorzugte Amine der Formel (VII) sind aromatische Amine wie Anilin, N-Methylanilin, 2,4,6-Trimethylanilin; heteroaromatische Amine wie Aminopyridin, Aminopyrimidin oder Aminopyrrol; cyclische Amine wie Piperidin, Piperazin, N-Methylpiperazin, Morpholin; aliphatische sekundäre Amine wie N,N-Diethylamin, N,N-Dibutylamin oder aliphatische primäre Amine wie n-Hexylamin.

Besonders bevorzugte Amine der Formel (VII) sind aromatische Amine wie Anilin, heteroaromatische Amine wie Aminopyridin oder Aminopyrimidin sowie cyclische Amine wie Piperidin, Piperazin, N-Methylpiperazin oder Morpholin.

Vorzugsweise wird das Amin der Formel (VII), bezogen auf die Arylverbindung der Formel (VI), in annähernd stöchiometrischen Mengen oder im Überschuss zugesetzt. Bevorzugt beträgt die Menge an Amin 1 bis 3 Äquivalente, besonders bevorzugt 1,2 bis 2 Äquivalente.

Als Basen werden vorzugsweise Alkali- und Erdalkalihydroxide wie Natriumhydroxid und Kaliumhydroxid, Alkali- und Erdalkalialkoholate wie Lithium-tert.-butanolat, Natrium-tert.-butanolat oder Kalium-tert.-butanolat, Alkali- und Erdalkalicarbonate wie Kaliumcarbonat, Alkali- und Erdalkaliamide, Butyllithium, Phenyllithium, Natriumhexamethyldisilazid oder Lithiumhexamethyl-disilazid eingesetzt, vorzugsweise Alkalialkoholate oder Alkalicarbonate, besonders bevorzugt Natrium-tert.-butanolat oder Kaliumcarbonat. Die Base wird vorzugsweise in einer Menge von 0,5 bis 2 Äquivalenten, insbesondere von 1 bis 3 Äquivalenten und ganz besonders bevorzugt von 1,2 bis 2 Äquivalenten, bezogen auf die Arylverbindung der Formel (VI), eingesetzt.

Die Verbindungen der Formel (I) können beispielsweise in Mengen von 0,01 bis 10 Mol-%, bevorzugt 0,05 bis 5 Mol-%, besonders bevorzugt 0,1 bis 2 Mol-%, bezogen auf die Arylverbindungen der Formel (VI), eingesetzt werden.

Dabei können die Verbindungen der Formel (I) separat oder aber *in situ* hergestellt werden. Werden die Verbindungen der Formel (I) *in situ* hergestellt, können die geträgerten Liganden in Gegenwart von Pd-(II)-Verbindungen zu den erfindungsgemäßen Verbindungen umgesetzt werden. Vorzugsweise werden dabei 1 bis 5 Äquivalente geträgerte Liganden bezogen auf die Pd-(II)-Verbindungen eingesetzt. Ein weiterer Zusatz an Base ist bei der *in situ*-Herstellung nicht notwendig.

Die Reaktion kann in Substanz oder in einem Lösungsmittel durchgeführt werden. Wird die Reaktion in einem Lösungsmittel durchgeführt, so sind dies vorzugsweise inerte organische Lösungsmittel. Bevorzugt werden aromatische Kohlenwasserstoffe wie Toluol, Xylole, Anisol, Tetralin und aliphatische Ether wie Tetrahydrofuran, Dimethoxyethan, Dioxan oder Tetrahydropyran eingesetzt. Besonders bevorzugte Lösungsmittel sind Toluol und Xylole. Es können auch Lösungsmittelgemische eingesetzt werden.

Bevorzugt wird die Reaktion in Substanz durchgeführt.

Die Reaktion wird vorzugsweise bei Temperaturen von 80°C bis 200°C, insbesondere von 20°C bis 180°C, besonders bevorzugt von 100°C bis 150°C, durchgeführt.

Die Umsetzung erfolgt vorzugsweise unter einem üblichen Schutzgas wie Stickstoff, Helium oder Argon.

Die substituierten Arylamine bilden sich nach dem erfindungsgemäßen Verfahren generell in guten bis sehr guten Ausbeuten von beispielsweise 50 bis 99 %. Die als Katalysatoren eingesetzten erfindungsgemäßen Komplexe der Formel (I) können nach Beendigung der Reaktion erneut in einer weiteren Umsetzung eingesetzt werden.

### Beispiele

### Beispiel 1 (nicht erfindungsgemäß)

### Herstellung von Diiodo-di-(1-methyl-3-(ethoxycarbonylpropyl)-imidazolin-2-yliden)-palladium (II)

In einem Schlenkrohr wurden 190 mg Pd(OAc)₂ (1 mmol) mit 900 mg NaI (6 mmol), 290 mg Natrium-tert.-butanolat (3 mmol) und 320 mg 1-Methyl-3-(ethoxycarbonylpropyl)-imidazoliumbromid (1 mmol) vorgelegt. Mittels einer Spritze wurden 20 ml Tetrahydrofuran und 5 ml Ethanol zugegeben. Das Reaktionsgefäß wurde für 10 min in einem Ultraschallbad plaziert, das Reaktionsgemisch wurde danach für einige Stunden bei 22°C und dann für 14 h bei 40°C gerührt. Der Fortschritt der Reaktion wurde mittels Dünnschichtchromatographie (SiO₂; Methylenchlorid/1 % Methanol) verfolgt. Nach beendeter Umsetzung wurden die Lösungsmittel im Vakuum abdestilliert, der Rückstand wurde in Methylenchlorid aufgenommen und säulenchromatographisch gereinigt (SiO₂; Methylenchlorid/1% Methanol).

### Beispiel 2

### Herstellung von auf Aminomethylpolystyrol-2%-Divinylbenzol geträgertem Diiododi-(1-methyl-3-(ethoxycarbonylpropyl)imidazolin-2-yliden)-palladium (II)

100 mg Aminomethylpolystyrol-2%-Divinylbenzol (Beladung 1 mmol) wurde mit 5 ml einer 2 M Lösung von Triethylaluminium in Toluol (0,1 mmol) versetzt. Nach einer Reaktionszeit von 1 h wurde der Überstand abdekantiert und 100 mg des Komplexes aus Beispiel 1 (0,2 mmol) in 10 ml Tetrahydrofuran zugesetzt. Das Reaktionsgemisch wurde 16 h zunächst bei 22°C, dann bei 40°C gerührt. Dabei entfärbte sich der Überstand zunehmend, während das Polymerharz eine gelbbraune Färbung annahm. Das Reaktionsgemisch wurde über eine Glasfritte filtriert und der Rückstand wurde mit Methylenchlorid, Tetrahydrofuran, Methanol, Wasser, Dimethylformamid und wieder Methanol gewaschen und im Vakuum getrocknet.

### Beispiel 3

### Herstellung von 4-Anilinobenzonitril

364 mg 4-Brombenzonitril (2 mmol), 205 mg Anilin (2,2 mmol), 231 mg Natrium-tert.-butanolat (2,4 mmol) und 50 mg geträgerter Komplex aus Beispiel 2 (0,04 mmol, 2 mol%) wurden in einem 20 ml Reaktionsgefäß mit Bördelkragen und Magnetrührkern vorgelegt. Das Gefäß wurde mit einer Septumkappe verschlossen, evakuiert und mit einer Argonatmosphäre befüllt. Es wurden 6 ml entgastes Xylol mit einer Spritze zugegeben und bei 120°C 16 h gerührt. Nach Beendigung der Reaktion wurde mit Wasser/Methylenchlorid ausgeschüttelt und der Katalysator dabei durch Filtration der kombinierten Fraktionen durch eine Glasfritte abgetrennt. Die organischen Fraktionen wurden getrocknet und gaschromatographisch analysiert.
Umsatz: 70 %
Ausbeute 4-Anilinobenzonitril: 270 mg
Selektivität 4-Anilinobenzonitril bezogen auf Umsatz: > 90 %

### Beispiel 4

### Herstellung von 4-Anilinobenzonitril

Der in Beispiel 3 verwendete geträgerte Komplex wurde mit Methanol, Tetrahydrofuran und Diethylether gewaschen und in einer erneuten, zu Beispiel 3 analogen Umsetzung eingesetzt.
Umsatz: 50 %
Ausbeute 4-Anilinobenzonitril: 190 mg
Selektivität 4-Anilinobenzonitril bezogen auf Umsatz: > 90 %

## Patentansprüche

1. Verbindungen der Formel (I) 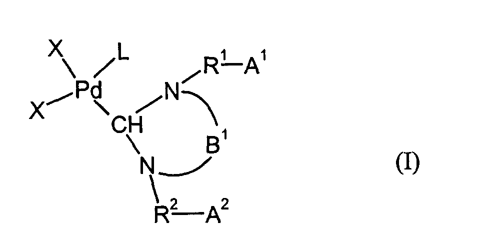 worin
X für Halogen, Trifluormethansulfonat, Acetylacetonat oder Acetat steht,
L für einen Rest der Formel P(D)₃ steht, wobei D für Alkyl, Cycloalkyl, Aryl, Aralkyl, Alkylaryl oder für Heteroaryl steht oder
für einen Rest der Formel N(E)₂ steht, wobei E für Alkyl, Cycloalkyl, Aryl, Aralkyl, Alkylaryl oder für Heteroaryl steht oder
für einen Rest der Formel (II) steht 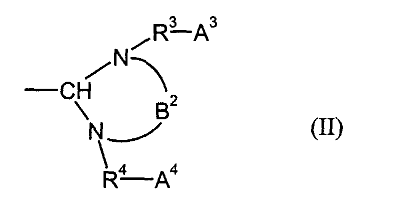
B¹ und B² gleich oder verschieden sind und für einen Rest zur Vervollständigung eines Heterocyclus stehen, insbesondere für 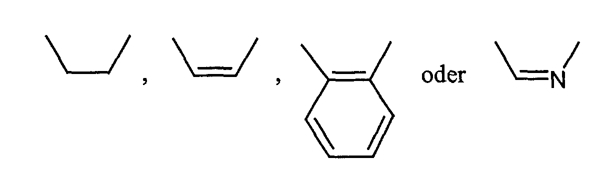
R¹-R⁴ gleich oder verschieden sind und für einen zweiwertigen Rest aus der Reihe Alkyl, Cycloalkyl, Aryl, Aralkyl und Alkylaryl stehen, der gegebenenfalls substituiert ist durch COO-(C₁-C₄-Alkyl), O(C₁-C₄-Alkyl) oder CONH₂,
A¹-A⁴ gleich oder verschieden sind und für Wasserstoff oder für eine chemische Bindung aus der Reihe -CONH-, -CO-O-OC-, -COO-, -O- oder 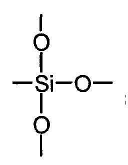 stehen, über die der Komplex an
(I)
den Träger gebunden ist, mit der Maßgabe, dass mindestens ein A von Wasserstoff verschieden ist.

2. Verbindungen gemäß Anspruch 1, worin
X für Halogen steht,
L für einen Rest der Formel P(D)₃ steht, wobei D für eine Gruppe aus der Reihe Cyclohexyl, Phenyl, Naphthyl und Tolyl steht, oder
für einen Rest der Formel (II) steht, 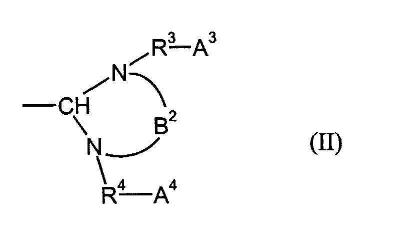
B¹ und B² gleich oder verschieden sind und für 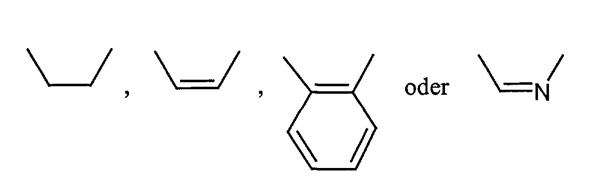
stehen,
R¹-R⁴ gleich oder verschieden sind und für einen zweiwertigen Rest aus der Reihe Alkyl, Cycloalkyl, Aryl, Aralkyl und Alkylaryl stehen, der gegebenenfalls substituiert ist durch COO-(C₁-C₄-Alkyl), O(C₁-C₄-Alkyl) oder CONH₂,
A¹-A⁴ gleich oder verschieden sind und für Wasserstoff oder für eine chemische Bindung aus der Reihe -CONH-, -CO-O-OC- -COO-, -O- oder 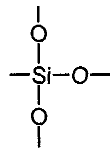 stehen, über die der Komplex an den Träger gebunden ist, mit der Maßgabe, dass mindestens ein A von Wasserstoff verschieden ist und der Träger ein Träger aus der Reihe anorganische Träger und polymere Träger ist.

3. Verbindungen gemäß Anspruch 1 oder 2, worin
X für I steht,
L für 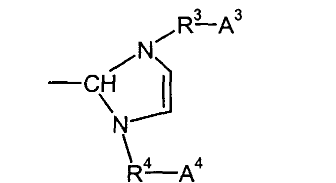
steht,
B¹ für 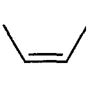 steht,
R¹ und R³ gleich sind und für einen zweiwertigen Rest aus der Reihe -(C₁-C₆-Alkyl)-, vorzugsweise -CH₂-, stehen,
R² und R⁴ gleich sind und für einen zweiwertigen Rest aus der Reihe -(C₁-C₆-Alkyl)-, vorzugsweise -(CH₂)₃-, stehen,
A¹ und A³ gleich sind und für Wasserstoff stehen, und
A² und A⁴ gleich sind und für eine chemische Bindung aus der Reihe -CONH-, -CO-O-OC-, -COO-, -O- oder 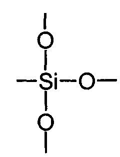 stehen, und der Träger ein anorganischer Träger aus der Reihe Kieselgel, Magnesiumoxid und Aluminiumoxid oder ein polymerer Träger aus der Reihe Polyester, Polyether, Polyethylen, Polypropylen und Polystyrol ist.

4. Verfahren zur Herstellung von Verbindungen gemäß den Ansprüchen 2 bis 3, **dadurch gekennzeichnet, dass** Verbindungen der Formel (III) und (IV) 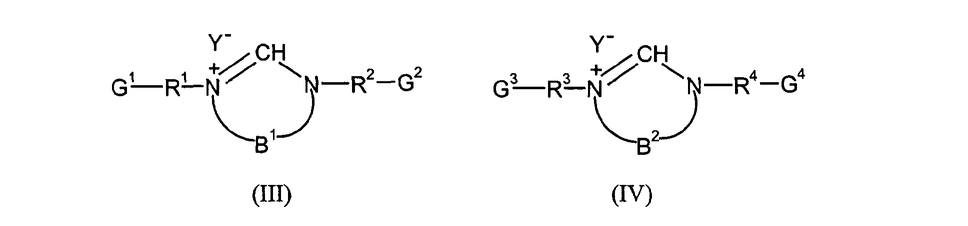 worin
B¹ und B² gleich oder verschieden sind und für einen Rest zur Vervollständigung eines Heterocyclus stehen, insbesondere für 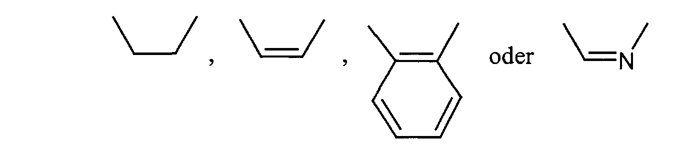
R¹-R⁴ gleich oder verschieden sind und für einen zweiwertigen Rest aus der Reihe Alkyl, Cycloalkyl, Aryl, Aralkyl und Alkylaryl stehen, der gegebenenfalls substituiert ist durch COO-(C₁-C₄-Alkyl), O(C₁-C₄-Alkyl) oder CONH₂,
G¹-G⁴ gleich oder verschieden sind und für Wasserstoff, COOH, CO-O-CO(C₁-C₄-Alkyl), COO(C₁-C₄-Alkyl), COCl, CO(C₁-C₄-Alkyl), COH, NH₂, NH(C₁-C₄-Alkyl), OH, Si(O-C₁-C₄-Alkyl)₃ oder OCN stehen, mit der Maßgabe, dass mindestens ein G von Wasserstoff verschieden ist,
Y für ein Anion aus der Reihe Cl, Br, I, C₁-C₄-Alkylsulfonat, C₆-C₁₄-Arylsulfonat, Hexafluorophosphat und Tetrafluoroborat steht,
oder Verbindungen der Formel (III) und P(D)₃,
wobei D für Alkyl, Cycloalkyl, Aryl, Aralkyl, Alkylaryl oder für Heteroaryl steht,
oder Verbindungen der Formel (III) und N(E)₂,
wobei E für Alkyl, Cycloalkyl, Aryl, Aralkyl, Alkylaryl oder für Heteroaryl steht
mit Pd-(II)-Verbindungen in Gegenwart einer Base umgesetzt werden und das Reaktionsprodukt auf einem Träger immobilisiert wird, welcher gegenüber G, außer Wasserstoff, reaktive Gruppen aufweist.

5. Verfahren zur Herstellung von Verbindungen gemäß den Ansprüchen 1 bis 3, **dadurch gekennzeichnet, dass** Verbindungen der Formel (III) oder Verbindungen der Formel (III) und (IV) 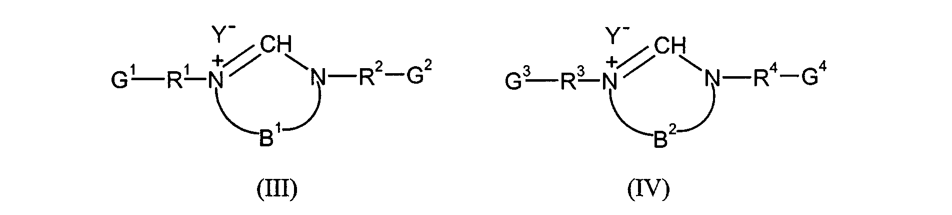 worin
B¹ und B² gleich oder verschieden sind und für einen Rest zur Vervollständigung eines Heterocyclus stehen, insbesondere für 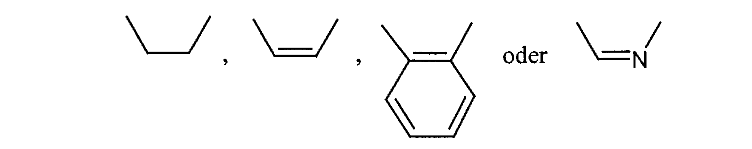
R¹-R⁴ gleich oder verschieden sind und für einen zweiwertigen Rest aus der Reihe Alkyl, Cycloalkyl, Aryl, Aralkyl und Alkylaryl stehen, der gegebenenfalls substituiert ist durch COO-(C₁-C₄-Alkyl), O(C₁-C₄-Alkyl) oder CONH₂,
G¹-G⁴ gleich oder verschieden sind und für Wasserstoff, COOH, CO-O-CO(C₁-C₄-Alkyl), COO(C₁-C₄-Alkyl), COCl, CO(C₁-C₄-Alkyl), COH, NH₂, NH(C₁-C₄-Alkyl), OH, Si(O-C₁-C₄-Alkyl)₃ oder OCN stehen, mit der Maßgabe, dass mindestens ein G von Wasserstoff verschieden ist,
Y für ein Anion aus der Reihe Cl, Br, I, C₁-C₄-Alkylsulfonat, C₆-C₁₄-Arylsulfonat, Hexafluorophosphat und Tetrafluoroborat steht,
auf einem Träger immobilisiert werden, welcher gegenüber G, außer Wasserstoff, reaktive Gruppen aufweist und mit Pd-(II)-Verbindungen und - für den Fall, dass nur Verbindungen der Formel (III) auf einem Träger immobilisiert sind - mit P(D)₃ ,wobei D für Alkyl, Cycloalkyl, Aryl, Aralkyl, Alkylaryl oder für Heteroaryl steht, oder N(E)₂ ,wobei E für Alkyl, Cycloalkyl, Aryl, Aralkyl, Alkylaryl oder für Heteroaryl steht, in Gegenwart einer Base umgesetzt werden.

6. Verfahren gemäß den Ansprüchen 4 und 5, **dadurch gekennzeichnet, dass** es sich bei den Pd-(II)-Verbindungen um eine Verbindung aus der Reihe Palladiumacetat, -halogenide, -nitrat, -carbonat, -ketonat und -acetylacetonat handelt.

7. Verfahren gemäß einem oder mehreren der vorangegangenen Ansprüche 4 bis 6, **dadurch gekennzeichnet, dass** es sich bei der Base um eine Verbindung aus der Reihe Alkalialkoholat, Erdalkalialkoholat, Alkalicarbonat und Erdalkalicarbonat handelt.

8. Verfahren gemäß einem oder mehreren der vorangegangenen Ansprüche 4 bis 7, **dadurch gekennzeichnet, dass** es sich bei dem Träger um einen anorganischen oder um einen polymeren Träger handelt.

9. Verfahren gemäß einem oder mehreren der vorangegangenen Ansprüche 4 bis 8, **dadurch gekennzeichnet, dass** es sich bei dem Träger um einen Träger aus der Reihe Kieselgel, Magnesiumoxid, Aluminiumoxid, Polystyrol, Polyether, Polyester, Polyethylen und Polypropylen handelt.

10. Verwendung der Verbindungen gemäß Ansprüchen 1 bis 3 als Katalysatoren.

11. Verwendung gemäß Anspruch 10 bei der Herstellung von Arylaminen.

12. Verfahren zur Herstellung von Arylaminen der Formel (V)
Ar-NR⁵R⁶ (V)
worin
Ar für Phenyl, Naphthyl, Pyridyl, Pyridazinyl, Pyrimidyl, Pyrazinyl, Pyrryl, Thiophenyl, Furyl, Imidazolyl, Oxazolyl, Isoxazolyl, Thiazolyl oder Triazolyl steht, und die vorgenannten Reste gegebenenfalls einen oder mehrere Substituenten aus der Reihe, C₁-C₈-Alkyl, C₃-C₈-Cycloalkyl, C₁-C₈-Alkoxy, C₁-C₈-Acyloxy, C₆-C₁₄-Aryl, C₆-C₁₄-Aryloxy, Halogen, C(Halogen)₃, NO₂, NH₂, NH(C₁-C₈-Alkyl), N(C₁-C₈-Alkyl)₂, NHCOR, NHCHO, NHCOOH, NHCOOR, OH, CN, COOH, CHO, CO(C₁-C₈-Alkyl), CO(C₆-C₁₄-Aryl), CO₂(C₆-C₁₄-Aryl), CO₂(C₁-C₈-Alkyl), CONH₂, SO₃H, SO₂R, SOR, PO(C₆-C₁₄-Aryl)₂, PO(C₁-C₈-Alkyl), Si(C₁-C₈-Alkyl)₃ und Heteroaryl tragen, wobei R für C₁-C₄-Alkyl steht, und
R⁵ und R⁶ unabhänging voneinander für Wasserstoff oder für C₁-C₁₂-Alkyl, C₃-C₈-Cycloalkyl oder C₆-C₁₄-Aryl stehen, wobei die vorgenannten Reste gegebenenfalls einen oder mehrere Substituenten aus der Reihe C₁-C₈-Alkyl, C₃-C₈-Cycloalkyl, C₁-C₈-Alkoxy, C₁-C₈-Acyloxy, C₆-C₁₄-Aryl, C₆-C₁₄-Aryloxy, Halogen, C(Halogen)₃, NO₂, NH₂, NH(C₁-C₈-Alkyl), N(C₁-C₈-Alkyl)₂, NHCOR, NHCHO, NHCOOH, NHCOOR, OH, CN, COOH, CHO, CO(C₁-C₈-Alkyl), CO(C₆-C₁₄-Aryl), CO₂(C₆-C₁₄-Aryl), CO₂(C₁-C₈-Alkyl), CONH₂, SO₃H, SO₂R, SOR, PO(C₆-C₁₄-Aryl)₂, PO(C₁-C₈-Alkyl), Si(C₁-C₈-Alkyl)₃ und Heteroaryl tragen, wobei R für C₁-C₄-Alkyl steht oder
gemeinsam für einen Ring mit bis zu 5 C-Atomen stehen, wobei ein C-Atom durch O oder N ersetzt sein kann,
durch Umsetzung von Arylverbindungen der Formel (VI)
Ar-Q (VI)
worin
Ar die oben angegebene Bedeutung hat und
Q für Halogen, Trifluormethansulfonyl oder Toluolsulfonyl steht,
mit Aminen der Formel (VII)
R⁵R⁶NH (VII)
worin
R⁵ und R⁶ die oben angegebene Bedeutung haben oder mit 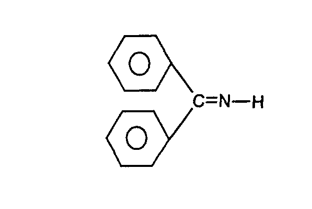 in Gegenwart von Basen, welches **dadurch gekennzeichnet ist, dass** die Umsetzung in Gegenwart von Verbindungen der Formel (I) gemäß Ansprüchen 1 bis 3 durchgeführt wird.

13. Verfahren gemäß Anspruch 12, **dadurch gekennzeichnet, dass** als Arylverbindungen der Formel (VI) 1,3- oder 1,4-disubstiuierte Benzole eingesetzt werden.
